# EUROPÄISCHE PATENTANMELDUNG

(11) **EP 0 859 450 A2**
(43) Veröffentlichungstag der Anmeldung: **19.08.1998**
(21) Anmeldenummer: 98101773.4
(22) Anmeldetag: 03.02.1998
(51) Int. Cl.: H02K 17/14, H02K 17/22

(54) **Elektrische, rotierende Maschine**

(30) Priorität: 13.02.1997 AT 239/97
(71) Anmelder: ELIN EBG Motoren GmbH, 1141 Wien (AT)
(72) Erfinder: Boldlehner, Hans-Georg, 8020 Graz (AT); Montenari, Günther, 8160 Weiz (AT); Schulz, Rudolf, 8160 Weiz (AT)
(74) Vertreter: Rieberer, Stefan, Dipl.-Ing.

(57) **Zusammenfassung**

Aufgabe der Erfindung ist es, eine elektrische, rotierende Maschine, insbesondere Drehstrom-Asynchronmaschine, vorzugsweise Generator für Windkraftanlagen zu schaffen, die für zwei Drehzahlen polumschaltbar ist, wobei bei einer Polzahl die Drehzahl über den Schlupf regelbar ist.

Die Maschine besteht aus einem Stator 1 und einem Rotor 2. Der Stator 1 weist eine polumschaltbare Wicklung 3 für zwei verschiedene Drehzahlen auf. Der Rotor 2 besteht aus geschichteten Läuferblechen 10, wobei diese auf der Welle 7 angeordnet sind. Dieser Rotor 2 weist eine Kurzschlußläuferwicklung 11 mit Kurzschlußringen 12 auf und darüber hinaus auch eine Schleifringläuferwicklung 13 für eine Polzahl. Das Läuferblech 10 weist entsprechende Nuten auf, wobei in die Nuten 15 die Schleifringläuferwicklung 13 eingebracht wird. Die Schlitze 16 bzw. die runden Nuten 17 werden, nachdem der Rotor 2 geschichtet ist, mit Aluminium oder Kupfer zu einer Kurzschlußläuferwicklung 11 ausgegossen. Die einzelnen Kurzschlußstäbe 18 der Kurzschlußläuferwicklung 11 werden über Kurzschlußringe 12 verbunden. Die Kurzschlußstäbe 18 sind radial innenliegender als die Schleifringläuferwicklung 13 im Rotor 2 angeordnet.

Mit der Erfindung wird das Ziel erreicht, die Windenergie optimal auszunützen, wobei der Generator einen sehr hohen Wirkungsgrad über einen weiten Drehzahlbereich, der ja dem Windgeschwindigkeitsbereich entspricht, aufweist.

## Beschreibung

Die Erfindung betrifft eine elektrische, rotierende Maschine, insbesondere Drehstrom-Asynchronmaschine, vorzugsweise Generator für Windkraftanlagen, wobei der Stator eine polumschaltbare Wicklung für zwei verschiedene Drehzahlen aufweist.

Bisher wurden derartige elektrische Maschinen vorwiegend mit einem als Kurzschlußläufer bezeichneten Rotor versehen. Derartige Maschinen weisen jedoch den Nachteil auf, daß sie einen relativ kleinen Schlupf aufweisen. Diesen kleinen Schlupf kann mann zwar durch Erhöhung der Läuferwiderstände vergrößern, wodurch jedoch die Maschine eine höhere Erwärmung erfährt und der Wirkungsgrad abnimmt.

Insbesondere, wenn derartige Maschinen in Windkraftanlagen eingesetzt werden, ergeben sich bei höheren Drehzahlen aber auch bei Laststößen aufgrund von starken Wind größte Probleme. Da die Drehzahl durch die Windgeschwindigkeit vorgegeben ist und die Maschine eine steife Kennlinie aufweist, rufen Laststöße ein wandern des Betriebspunktes hervor. Höhere Windgeschwindigkeiten, insbesondere diskontinuierliche, kann eine derartige Anlage nicht optimal nützen. Häufig mußte die Anlage abgeschaltet oder aus dem Wind genommen werden. Leistungs- bzw. Energieausfälle sind die Folge.

Ein anderer Weg ist es, einen Schleifringläufer mit nur einer Statorwicklung einzusetzen. Bei diesem Schleifringläufer kann über Außenwiderstände der Schlupf erhöht werden. Nachteilig ist hier vor allem die Wärmeproduktion in den Außenwiderständen, die einer Kühlung bedarf. Darüber hinaus muß aufgezeigt werden, daß nur eine Drehzahl zur Verfügung steht. D.h. ein derartiger Maschinentyp ist nur entweder bei geringen oder großen Windgeschwindigkeiten einsetzbar. Für zwei Drehzahlen müßte eine zweite Stator- und Rotorwicklung vorgesehen werden, wobei auch 6 Schleifringe notwendig wären.

Aufgabe der Erfindung ist es daher, eine Maschine der eingangs genannten Art zu schaffen, die einerseits die obigen Nachteile vermeidet und die anderseits für zwei Drehzahlen polumschaltbar ist, wobei bei einer Polzahl die Drehzahl über den Schlupf regelbar ist. Ein weiteres Ziel der Erfindung ist es, die Windenergie optimal auszunützen, wobei der Generator einen sehr hohen Wirkungsgrad über einen weiten Drehzahlbereich, der ja dem Windgeschwindigkeitsbereich entspricht, aufweist.

Diese Aufgaben werden mit der Erfindung gelöst. Die erfindungsgemäße elektrische, rotierende Maschine ist dadurch gekennzeichnet, daß der Rotor eine Kurzschlußläuferwicklung mit Kurzschlußringen aufweist, daß zwischen den Kurzschlußstäben der Kurzschlußläuferwicklung eine Schleifringläuferwicklung für eine Polzahl, die mit einer der Polzahlen im Stator ident ist, angeordnet ist und daß die Schleifringläuferwicklung über Schleifringe an Außenwiderstände geführt ist.

Mit dieser Erfindung ist es erstmals möglich; bei kleinen Leistungen die Maschine als Kurzschlußläufer mit steifer Kennlinie und gutem Wirkungsgrad und bei größeren Leistungen mit der Schleifringläuferwicklung und deren Außenwiderstände eine regelbare Kennlinie über den Schlupf zu betreiben.

Ein weiterer Vorteil ist auch darin zu sehen, daß die Baugröße der Maschine nicht entscheidend vergrößert ist und der zusätzliche Fertigungsaufwand minimal ist, wodurch auch die Herstellkosten sich nicht eklatant erhöhen.

Insbesondere bei Windkraftanlagen wird mit der erfindungsgemäßen Maschine die Windenergie besser ausgenützt, wobei dazu auch eine größere Bandbreite der Windgeschwindigkeit beiträgt.

Gemäß einem weiteren Merkmal der Erfindung sind die Kurzschlußstäbe radial innenliegender als die Schleifringläuferwicklung im Rotor angeordnet. Prinzipiell muß die Kurzschlußläuferwicklung so gestaltet und angeordnet sein, daß die Schleifringläuferwicklung unbeeinflußt arbeiten kann. Wesentlich dabei ist, daß beide Läuferarten magnetisch möglichst entkoppelt sind und selbständig betrieben werden können.

Nach einer besonderen Ausgestaltung der Erfindung dienen die im Rotor vorgesehenen Schlitze für die Kurzschlußstäbe der Kurzschlußläuferwicklung zur Steuerung der magnetischen Streuung der Nuten. Über die entsprechende Konstruktion können die elektrischen Eigenschaften vehement verbessert werden.

Gemäß einem besonderen Merkmal der Erfindung sind im Rotor die Nuten für die Schleifringläuferwicklung zwischen den Schlitzen für die Kurzschlußstäbe angeordnet.

Abgesehen davon, daß durch diese Anordnung der Umfang des Rotors nicht enorm erhöht werden muß, würde bei einer konträren Anordnung die Kurzschlußläuferwicklung im gemeinsamen Betrieb mit der Schleifringläuferwicklung als Dämpferwicklung wirken.

Nach einer weiteren Ausgestaltung der Erfindung ist die Schleifringläuferwicklung 4-polig, 3-phasig und einschichtig und die Statorwicklung 4-polig und 6-polig ausgeführt. Insbesondere beim Einsatz dieser Maschine in Windkraftanlagen hat sich diese Konfiguration bestens bewährt. Mit einer derartigen Maschine kann weiter an die Leistungsgrenzen herangegangen werden, sodaß auch die Arbeitsleistung erhöht wird.

Gemäß einem weiteren Merkmal der Erfindung sind im 4-poligen Maschinenbetrieb sowohl die Kurzschlußläuferwicklung als auch die Schleifringläuferwicklung aktiv. Aufgrund dieser Tatsache muß die Wicklung sowohl für den Kurzschlußläufer als auch für den Schleifringläufer nicht auf die Nennleistung ausgelegt werden. Prinzipiell sind damit kleinere Einheiten, die leichter sind und aus denen auch mehr herauszuholen ist, möglich geworden.

Nach einer weiteren Ausgestaltung der Erfindung ist im 6-poligen Maschinenbetrieb die Schleifringläuferwicklung offen. Im unteren Drehzahlbereich, d. h. auch bei schwachen Geschwindigkeiten, also im Bereich bis etwa 4 m/sec. wird entsprechend der Windenergie elektrische Leistung produziert.

Es muß auch darauf hingewiesen werden, daß die erfindungsgemäße Maschine bei beiden Typen von Windkraftanlagen, also bei Pitch und auch bei Stall, als Generator eingesetzt werden kann.

Darüber hinaus ist die erfindungsgemäße Maschine auch als Motor einsetzbar, beispielsweise bei schwierigen Anlaufverhältnissen zu hohen Drehzahlen wie sie z. B. bei Entrindungsantrieben mit Anlaufkupplung vorkommen.

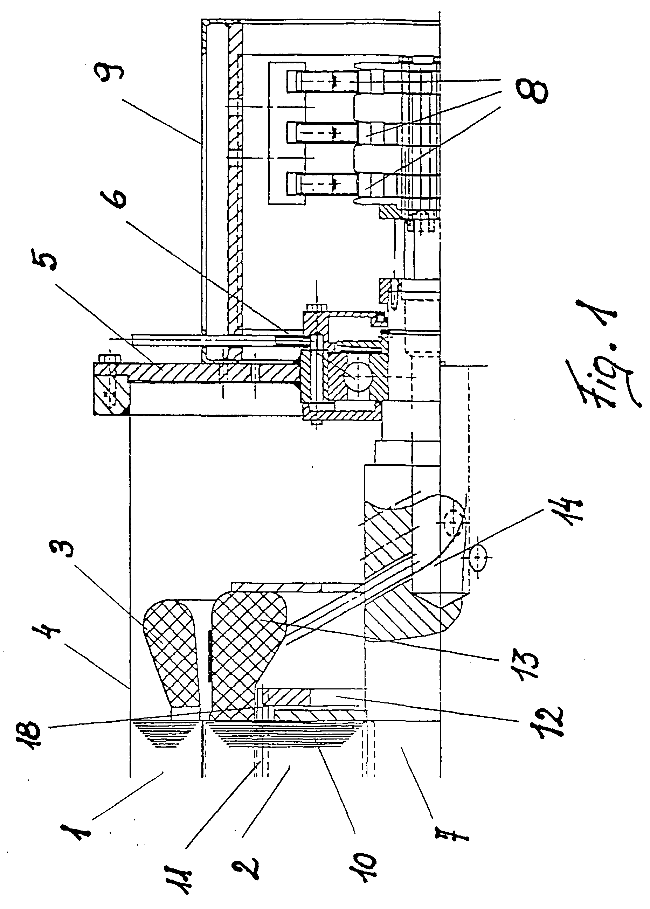

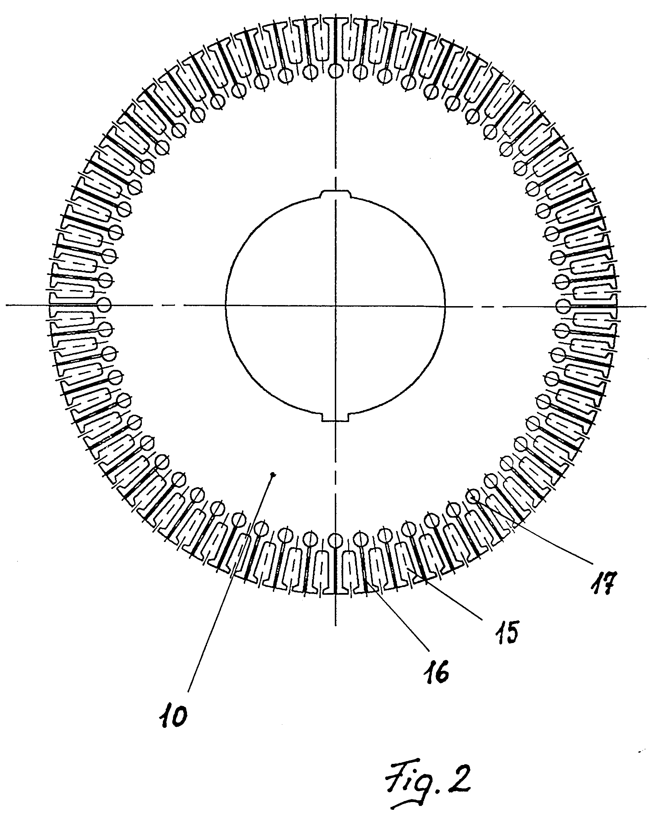

Die Erfindung wird anhand eines in der Zeichnung dargestellten Ausführungsbeispieles näher erläutert. Fig. 1 zeigt einen Schritt durch eine elektrische, rotierende Maschine und Fig. 2 ein Läuferblech.

Die elektrische, rotierende Maschine ist eine Drehstrom-Asynchronmaschine, die als Generator beispielsweise bei Windmühlen bzw. Windkraftanlagen einsetzbar ist. Die Maschine besteht aus einem Stator 1 und einem Rotor 2. Der Stator 1 weist eine polumschaltbare Wicklung 3 für zwei verschiedene Drehzahlen auf. Diese Statorwicklung 3 ist dabei einersetis 4-polig und anderseits 6-polig ausgeführt. Dieser Stator 1 ist von einem Maschinengehäuse 4 umgeben, wobei seitlich die Lagerschilde 5 mit den Lagern 6 die Maschine begrenzen.

In den Lagern 6 ist die Welle 7 für den Rotor 2 gelagert. Darüber hinaus wird auf einer Seite der Maschine die Welle 7 durch das Lagerschild 5 durchgeführt und am verlängerten Wellenende sind die Schleifringe 8 angeordnet. Die Schleifringe 8 sind mit einer am Lagerschild 5 befestigten Abdeckung 9 versehen, wobei auf der Abdeckung 9 auch der Klemmenkasten vorgesehen sein kann.

Der Rotor 2 besteht aus geschichteten Läuferblechen 10, wobei diese auf der Welle 7 angeordnet sind. Dieser Rotor 2 weist eine Kurzschlußläuferwicklung 11 mit Kurzschlußringen 12 auf und darüber hinaus auch eine Schleifringläuferwicklung 13 für eine Polzahl. Die Schleifringläuferwicklung 13 ist über Bohrungen 14 in der Welle 7 zu den Schleifringen 8 geführt. Die Schleifringe 8 werden in bestimmten Betriebszuständen der Maschine über nicht dargestellte Außenwiderstände geschlossen.

Wie bereits erwähnt kann die Statorwicklung 3 4-polig und 6-polig ausgeführt sein. In einem derartigen Fall ist die Schleifringläuferwicklung 13 4-polig, 3-phasig und einschichtig ausgeführt.

Gemäß der Fig. 2 ist ein Läuferblech 10 mit den entsprechenden Nuten dargestellt, wobei in die Nuten 15 die Schleifringläuferwicklung 13 eingebracht wird. Die Schlitze 16 bzw. die runden Nuten 17 werden, nachdem der Rotor 2 geschichtet ist, mit Aluminium oder Kupfer zu einer Kurzschlußläuferwicklung 11 ausgegossen . Die einzelnen Kurzschlußstäbe 18 der Kurzschlußläuferwicklung 11 werden über Kurzschlußringe 12 verbunden. Die Kurzschlußstäbe 18 sind radial innenliegender als die Schleifringläuferwicklung 13 im Rotor 2 angeordnet. Die im Rotor 2 vorgesehenen Schlitze 16 für die Kurzschlußstäbe 18 dienen zur Steuerung der magnetischen Streuung der Nuten.

Die Nuten 15 für die Schleifringläuferwicklung 13 sind zwischen den Schlitzen 16 für die Kurzschlußstäbe 18 angeordnet. Wesentlich dabei ist aber trotzdem, daß beide Läuferarten magnetisch möglichst entkoppelt sind und selbständig betrieben werden können.

Man unterscheidet im Betrieb der Maschine als Windkraftwerk generell zwischen mehreren Betriebsarten. Bei Windgeschwindigkeiten in der Größenordnung von 2,5 bis 4 m/s, also in der Startphase ist die Schleifringläuferwicklung 13 offen, d. h. die Schleifringe 8 sind nicht über Außenwiderstände geschlossen. Es wirkt also im Rotor 2 nur die Kurzschlußläuferwicklung 11, und im Stator 1 die 6-polige Wicklungsausführung, wobei bei einer 600 KW Anlage Leistungen zwischen 20 KW und etwa 150 KW erreicht werden.

Im Übergangsbereich, das sind Windgeschwindigkeiten in der Größenordnung von 4 bis 8 m/s wird im Stator von der 6-poligen auf die 4-polige Wicklungsausführung umgeschaltet. In dieser Betriebsart wirkt einerseits die Kurzschlußläuferwicklung 11 und anderseits auch bereits die Schleifringläuferwicklung 13, wobei der Läuferwiderstand der durch die Außenwiderstände verändert wird, noch sehr gering ist. In diesem Bereich kann eine Leistungsabgabe in der Größenordnung von 150 KW bis 500 KW erreicht werden.

Bei hohen Windgeschwindigkeiten und vor allem bei diskontinuierlichen Windböen kommt die 4-polige Schleifringläuferwicklung 13 mit der 4-poligen Statorwicklung so richtig zum Tragen, wobei über die Außenwiderstände der Schlupf der Maschine geregelt werden kann. Mit einem hohen Schlupf kann eine weichere Kennlinie erreicht werden. Wie bereits erwähnt, treten bei Windkraftgeneratoren bei großen Leistungen Probleme auf, die durch eine drehzahlweiche Generatorkennlinie entscheidend entschärft werden können. Laststöße werden vom System Windrad-Getriebe-Generator verkraftet, ohne daß das System vom Netz getrennt werden muß.

Die Statorwicklung 3 wird aufgrund der Windgeschwindigkeit von der 6-poligen Ausführung auf die 4-polige Ausführung umgeschaltet. Ebenso werden die Außenwiderstände für die Schleifringläuferwicklung 13 aufgrund der Windgeschwindigkeit aktiviert. Die Umschaltung bzw. Aktivierung erfolgt aber auch im Hinblick auf die Leistungsabgabe bzw. auf die Windart. So werden Fallwinde, Scherwinde etc. berücksichtigt, wobei natürlich auch die Windgeschwindigkeit der letzten Meßperiode von beispielsweise 10 Minuten als Parameter herangezogen werden. Diese Parameter sind in einem Datenverarbeitungsprogramm berücksichtigt, das diese Umschaltung bzw. die Aktivierung veranlaßt.

## Patentansprüche

1. Elektrische, rotierende Maschine, insbesondere Drehstrom-Asynchronmaschine, vorzugsweise Generator für Windkraftanlagen, wobei der Stator eine polumschaltbare Wicklung für zwei verschiedene Drehzahlen aufweist, dadurch gekennzeichnet, daß der Rotor (2) eine Kurzschlußläuferwicklung (11) mit Kurzschlußringen (12) aufweist, daß zwischen den Kurzschlußstäben (18) der Kurzschlußläuferwicklung (11) eine Schleifringläuferwicklung (13) für eine Polzahl, die mit einer der Polzahlen im Stator (1) ident ist, angeordnet ist und daß die Schleifringläuferwicklung (11) über Schleifringe (8) an Außenwiderstände geführt ist.

2. Elektrische, rotierende Maschine nach Anspruch 1, dadurch gekennzeichnet, daß die Kurzschlußstäbe (18) radial innenliegender als die Schleifringläuferwicklung (13) im Rotor (2) angeordnet sind.

3. Elektrische, rotierende Maschine nach Anspruch 1 oder 2, dadurch gekennzeichnet, daß die im Rotor (2) vorgesehenen Schlitze (16) für die Kurzschlußstäbe (18) der Kurzschlußläuferwicklung (11) zur Steuerung der magnetischen Streuung der Nuten (15, 17) dienen.

4. Elektrische, rotierende Maschine nach einem der Ansprüche 1 bis 3, dadurch gekennzeichnet, daß im Rotor (2) die Nuten (15) für die Schleifringläuferwicklung (13) zwischen den Schlitzen (16) für die Kurzschlußstäbe (18) angeordnet sind.

5. Elektrische, rotierende Maschine nach einem der Ansprüche 1 bis 4, dadurch gekennzeichnet, daß die Schleifringläuferwicklung (13) 4-polig, 3-phasig und einschichtig und die Statorwicklung (3) 4-polig und 6-polig ausgeführt ist.

6. Elektrische, rotierende Maschine nach Anspruch 5, dadurch gekennzeichnet, daß im 4-poligen Maschinenbetrieb sowohl die Kurzschlußläuferwicklung (11) als auch die Schleifringläuferwicklung (13) aktiv sind.

7. Elektrische, rotierende Maschine nach Anspruch 5, dadurch gekennzeichnet, daß im 6-poligen Maschinenbetrieb die Schleifringläuferwicklung (13) offen ist.
